# EUROPEAN PATENT APPLICATION

(11) **EP 2 832 789 A1**
(43) Date of publication of application: **04.02.2015**
(21) Application number: 13768463.5
(22) Date of filing: 29.03.2013
(51) Int. Cl.: C08L 51/04, C08L 25/12, C08L 67/02

(54) **RESIN COMPOSITION AND MOLDED BODY THEREOF**

(30) Priority: 30.03.2012 JP 2012080446
(71) Applicant: Asahi Kasei Chemicals Corporation, Tokyo 101-8101 (JP)
(72) Inventor: SUGIOKA Akiko, Tokyo 101-8101 (JP); FUJISAWA Tomoyuki, Tokyo 101-8101 (JP)
(74) Representative: O'Brien, Simon Warwick
(86) International application number: PCT/JP2013/059499
(87) International publication number: WO 2013/147143

(57) **Abstract**

A thermoplastic resin composition which contains (A) a graft copolymer that is obtained by grafting at least two kinds of monomers, which are selected from the group consisting of aromatic vinyl monomers, vinyl cyanide monomers and other copolymerizable monomers, onto a rubbery polymer, (B) a polymer that is obtained by polymerizing at least two kinds of monomers, which are selected from the group consisting of aromatic vinyl monomers, vinyl cyanide monomers and other copolymerizable monomers, and (C) a polyester that contains at least an alicyclic diol and an aromatic dicarboxylic acid. When the total of the components (A)-(C) is taken as 100% by mass, the component (A) is 15-50% by mass and the total of the component (B) and the component (C) is 50-85% by mass; and the component (A) has a linear expansion coefficient of from 12.5 × 10⁻⁵/°C to 19 × 10⁻⁵/°C.

## Description

### Technical Field

The present invention relates to a resin composition of which a molded article having both a high impact resistance and a high quality appearance can be formed simply by injection molding without coating and which is also excellent in flow properties and chemical resistance, and a molded article thereof.

### Background Art

Since an acrylonitrile • butadiene • styrene copolymer (ABS resin) is a well-balanced resin excellent in flow properties, impact resistance, chemical resistance, and also surface appearance, it is being used in various fields of a material for a vehicle, housings of an office automation appliance, a household electrical product and a toy, and the like.

In particular, in the field in which a high impact resistance is required, such as fields of a housing of a portable appliance, a housing of a household electrical appliance, and an interior part of a vehicle, an alloy with an aromatic polycarbonate (PC/ABS) particularly excellent in impact resistance is extremely widely used. In particularly, in the electronic equipment field, a portable appliance is drastically spread, and the following tendency is rapidly increased: the thickness of a product is thinned in order to achieve the reduction in weight by the reduction in amount of a resin used. For example, Patent Literature 1 discloses a technique for improving molding flow properties with impact resistance maintained.

On the other hand, in recent years, the advance in injection molding and mold technique has resulted in the enhancement in surface transferability of a mold and has made weldless molding possible at high cycles, thereby enabling to provide a high quality appearance. Due to such an advance in molding technique, uncoating is increasingly preferred, since coating has the problem of environmental pollution caused by VOC emission and the problem of the deterioration in appearance due to peeling of coating, and also coating takes high cost.

The color of a resin material itself is important for uncoating, and thus a resin material having a jet-black color is increasingly adopted as one material having an appearance with a sense of high quality, in the housing of a portable appliance and the housing of a household electrical appliance. For example, Patent Literature 2 discloses a technique for dyeing an ABS resin with black by coloring formulation using a specific organic dye to achieve jet-blackness. In order to obtain such a molded article having excellent colorability, a high total light transmittance is required, and Patent Literature 3 describes that the total light transmittance of a resin itself is required to be 50% or more, and that if the total light transmittance is less than 30%, colorability is not sufficient (Patent Literature 3).

### Citation List

### Patent Literature

Patent Literature 1: JP 10-147703 A
Patent Literature 2: JP 2005-132970 A
Patent Literature 3: JP 4731948 B

### Summary of Invention

### Technical Problem

The PC/ABS disclosed in Patent Literature 1, however, cannot achieve an appearance of an excellent color tone, and hence, material having two characteristics, both high impact resistance and high quality appearance, which conflict with each other could not be obtained simply by injection molding. In addition, since the PC/ABS is easily hydrolyzed under alkali and/or high-temperature and high-humidity environments, the application thereof is limited. In addition, in Patent Literatures 2 and 3, while high jet-blackness, transparency, and jet-blackness are achieved, impact resistance is low and material having both a high impact resistance and a high quality appearance is not obtained.

The present invention has been made under the above circumstances, and an object thereof is to provide a resin composition of which a molded article having both a high impact resistance and a high quality appearance can be formed simply by injection molding without coating. It is also to provide a resin composition which is also excellent in flow properties and chemical resistance, and a molded article thereof.

### Solution to Problem

The present inventor has intensive studies in order to achieve the above object. As a result, the present problem has been solved by a thermoplastic resin composition including (A) a graft copolymer obtained by grafting a rubber polymer with at least two monomers selected from the group consisting of an aromatic vinyl monomer, a vinyl cyanide monomer and other copolymerizable monomers, (B) a polymer obtained by polymerizing at least two monomers selected from the group consisting of an aromatic vinyl monomer, a vinyl cyanide monomer and other copolymerizable monomers, and (C) a polyester comprising at least an alicyclic diol and an aromatic dicarboxylic acid, wherein, when a total amount of the components (A) to (C) is regarded as 100% by mass, an amount of the component (A) is 15 to 50% by mass and a total amount of the components (B) and (C) is 85 to 50% by mass, and a coefficient of linear expansion of the component (A) is 12.5 × 10⁻⁵ to 19 × 10⁻⁵/°C.

That is, the present invention is as follows.
(1) A thermoplastic resin composition including:
   (A) a graft copolymer obtained by grafting a rubber polymer with at least two monomers selected from the group consisting of an aromatic vinyl monomer, a vinyl cyanide monomer and other copolymerizable monomers,
   (B) a polymer obtained by polymerizing at least two monomers selected from the group consisting of an aromatic vinyl monomer, a vinyl cyanide monomer and other copolymerizable monomers, and
   (C) a polyester comprising at least an alicyclic diol and an aromatic dicarboxylic acid, wherein, when a total amount of the components (A) to (C) is regarded as 100% by mass, an amount of the component (A) is 15 to 50% by mass and a total amount of the components (B) and (C) is 50 to 85% by mass, and a coefficient of linear expansion of the component (A) is 12.5 × 10⁻⁵ to 19 × 10⁻⁵/°C.
(2) The thermoplastic resin composition according to (1), wherein the alicyclic diol in the component (C) includes 2,2,4,4-tetramethyl-1,3-cyclobutanediol (TMCD) and 1,4-cyclohexanedimethanol (CHDM), and the aromatic dicarboxylic acid in the component (C) includes terephthalic acid.
(3) The thermoplastic resin composition according to (1) or (2), wherein, when the total amount of the components (A) to (C) is regarded as 100% by mass, a total amount of the components (A) and (B) is 20 to 80% by mass and an amount of the component (C) is 80% by mass to 20% by mass.
(4) The thermoplastic resin composition according to any of (1) to (3), wherein, when a total amount of the aromatic vinyl monomer, the vinyl cyanide monomer and the other copolymerizable monomers in the component (B) is regarded as 100% by mass, an amount of the vinyl cyanide monomer contained is 30 to 45% by mass.
(5) The thermoplastic resin composition according to any of (1) to (4), wherein, when a total amount of the aromatic vinyl monomer, the vinyl cyanide monomer and the other copolymerizable monomers in the component (B) is regarded as 100% by mass, 1 to 15% by mass of an acrylate monomer unit component is included.
(6) The thermoplastic resin composition according to any of claims 1 to 5, further including carbon black and/or a dye as a coloring agent.
(7) An injection-molded article obtained by injection-molding the thermoplastic resin composition according to any of (1) to (6).
(8) The injection-molded article according to (7), wherein the injection-molded article is a housing.
(9) The injection-molded article according to (7) or (8), wherein the injection-molded article is uncoated.

### Advantageous Effects of Invention

The present invention can provide a resin composition of which a molded article having both a high impact resistance and a high quality appearance can be formed simply by injection molding without coating and which is excellent in flow properties and chemical resistance, and a molded article thereof.

### Description of Embodiments

Hereinafter, an embodiment for currying out the present invention (hereinafter, simply referred to as "the present embodiment".) is described in detail.

### <Graft copolymer (A), Polymer (B)>

A rubber polymer for (A) a graft copolymer obtained by grafting a rubber polymer with at least two monomers selected from the group consisting of an aromatic vinyl monomer, a vinyl cyanide monomer and other copolymerizable monomers, according to the present embodiment, includes conjugated diene rubbers such as polybutadiene, a butadiene-styrene copolymer, a butadiene-acrylonitrile copolymer, a butadiene-acrylic copolymer, a styrene-butadiene-styrene block copolymer, polyisoprene and a styrene-isoprene copolymer, and hydrogenated products thereof, acrylic rubbers such as ethyl acrylate and butyl acrylate, an ethylene-α-olefin-polyene copolymer, an ethylene-α-olefin copolymer, a silicone rubber, and a silicone-acrylic rubber. These can be used singly or in combination of two or more.

Among them, polybutadiene, a styrene-butadiene copolymer, a styrene-butadiene block copolymer, or an acrylonitrile-butadiene copolymer is particularly preferably used in terms of impact resistance.

The rubber polymer may have uniform composition, may include polymers each having different composition, or may have composition that is continuously changed.

An aromatic vinyl monomer in each of (A) the graft copolymer obtained by graft polymerization of at least two monomers selected from the group consisting of an aromatic vinyl monomer, a vinyl cyanide monomer and other copolymerizable monomers in the presence of the rubber polymer, and (B) a polymer obtained by polymerizing at least two monomers selected from the group consisting of an aromatic vinyl monomer, a vinyl cyanide monomer and other copolymerizable monomers, according to the present embodiment, includes styrene, α-methylstyrene, o-methylstyrene, p-methylstyrene, ethylstyrene, p-t-butylstyrene and vinylnaphthalene. These can be used singly or in combination of two or more. Among them, styrene and α-methylstyrene are particularly preferable.

A vinyl cyanide monomer in each of (A) the graft copolymer obtained by graft polymerization of at least two monomers selected from the group consisting of an aromatic vinyl monomer, a vinyl cyanide monomer and other copolymerizable monomers in the presence of the rubber polymer, and (B) the polymer obtained by polymerizing at least two monomers selected from the group consisting of an aromatic vinyl monomer, a vinyl cyanide monomer and other copolymerizable monomers, according to the present embodiment, includes acrylonitrile and methacrylonitrile. These can be used singly or in combination of two.

Other copolymerizable monomers in each of (A) the graft copolymer obtained by graft polymerization of at least two monomers selected from the group consisting of an aromatic vinyl monomer, a vinyl cyanide monomer and other copolymerizable monomers in the presence of the rubber polymer, and (B) the polymer obtained by polymerizing at least two monomers selected from the group consisting of an aromatic vinyl monomer, a vinyl cyanide monomer and other copolymerizable monomers, according to the present embodiment, includes acrylates such as methyl acrylate, ethyl acrylate and butyl acrylate, and similarly substituted methacrylates, as well as acrylic acids such as acrylic acid and methacrylic acid, N-substituted maleimide monomers such as N-phenylmaleimide and N-methylmaleimide, and glycidyl group-containing monomers such as glycidyl methacrylate. Among them, methyl acrylate, ethyl acrylate, butyl acrylate, methyl methacrylate, N-phenylmaleimide and glycidyl methacrylate are more preferable, and butyl acrylate and butyl methacrylate are particularly preferable. These other copolymerizable monomers impart excellent flow properties and transparency.

In the present invention, the graft ratio of the graft copolymer (A) is preferably 200% or less, more preferably 50 to 190%, and further preferably 60 to 170%. When the graft ratio is in this range, the coefficient of linear expansion of the graft copolymer (A) can be controled to 12.5 × 10⁻⁵ to 19 × 10⁻⁵/°C.

In the present invention, the graft copolymer (A) essentially has a specific coefficient of linear expansion. The coefficient of linear expansion of the component (A) is 12.5 x 10⁻⁵ to 19 × 10⁻⁵/°C, and preferably 12.5 × 10⁻⁵ to 17 × 10⁻⁵/°C. When the coefficient of linear expansion is 19 × 10⁻⁵/°C or less, excellent image clearness and transparency can be exhibited. The image clearness means the clearness of an image reflected on a surface, for example, an image reflected on a piano or an image reflected on a high-class black vehicle may be imagined, and a sense of high quality can be gained from such an image. With respect to the transparency, a better chromogenic property and a deeper color is achieved at the same time, when a base resin is more transparent. Thus, a color tone with a sense of high quality can be achieved. In addition, when the coefficient of linear expansion is 12.5 × 10⁻⁵/°C or more, sufficient impact resistance is achieved.

For measurement of the coefficient of linear expansion of the component (A), a solvent that dissolves resin components other than the graft copolymer (A) but does not dissolve the graft copolymer (A) is selected to take out an insoluble (E) from a composition or an injection-molded article including the graft copolymer (A), and the insoluble (E) is subjected to the measurement. As the solvent, for example, methylene chloride or chloroform can be suitably used.

The insoluble (E) can be taken out by a centrifuge or the like, and the insoluble (E) vacuum-dried is molded by compression or the like. The compression molding conditions are, for example, as follows: the insoluble (E) sandwiched by an aluminum plate and/or a metal plate from above and below is molten on a heating plate at 230°C, subjected to compression so as to have a thickness of 4 mm, and thereafter solidified on a cooling plate at 40°C. After the molded article is cut by a plastic cutting machine into a piece having a size measuring 4 mmt in length, 5 mm in width and 10 mm in height, measurement can be made by a thermodilatometer (TMA) according to ASTM D696 to thereby determine the coefficient of linear expansion of the component (A).

When the mass of the rubber polymer and the mass of a graft components which are graft-copolymerized, in the graft copolymer (A), are designated as (A1) and (A2), respectively, the graft ratio can be defined as ((A2)/(A1)) × 100 (%).

The graft ratio may be determined by the same method as in the measurement of the coefficient of linear expansion. Namely, a solvent that dissolves resin components other than the graft copolymer (A) but does not dissolve the graft copolymer (A) may be selected to take out the insoluble (E) from the composition or the injection-molded article including the graft copolymer (A). The graft ratio may be determined based on the result obtained by performing separation to the insoluble (E) and a soluble component by a centrifuge, and analyzing the insoluble (E) taken out, by a Fourier transform infrared spectrophotometer (FT-IR) or the like, with respect to a rubber component and other component.

The graft copolymer (A) of the thermoplastic resin composition of the present invention is in the form of being dispersed in a continuous phase of the polymer (B). The shape thereof may be amorphous, a rod shape, a plate shape, a particle shape, or the like, but is preferably a particle shape in terms of impact resistance. Any of a case where such particles are dispersed in the continuous phase with one being independent from another, and a case where some aggregates are dispersed therein can be adopted, but the case where one is independent from another is preferable in terms of impact resistance.

The size of the rubber polymer dispersed in the thermoplastic resin composition, as a volume average particle size, is preferably 0.1 µm or more in terms of the release effect in the production of the injection-molded article, and is preferably 1.2 µm or less in terms of the image clearness of the surface of the injection-molded article. The volume average particle size is more preferably 0.15 to 0.8 µm, further preferably 0.15 to 0.6 µm, and particularly preferably 0.2 to 0.4 µm. The volume average particle size can be determined by preparing an ultrathin section from the injection-molded article, observing the ultrathin section by a transmission electron microscope (TEM), and image-analyzing an arbitrary region of 50 µm × 50 µm of the ultrathin section.

Herein, the volume average particle size corresponds to a diameter in the case where the shape of the rubber polymer is spherical, and corresponds to the average value of the longest diameter and the shortest diameter in the case where the shape of the rubber polymer is not spherical.

The above-described rubber polymer (A1) may have an ununiform structure including a rubber content and a resin component, such as a structure including occlusion in which a resin component is phase-separated in the rubber polymer. The volume average particle size of a rubber polymer portion in the case of particles including occlusion is measured with the occlusion included.

As a method for producing the graft copolymer (A), a known method such as emulsion polymerization, block polymerization, suspension polymerization, suspension block polymerization and solution polymerization can be adopted. When the graft copolymer is produced by emulsion polymerization among them, a method using a redox initiator/catalyst system or a pyrolytic initiator is exemplified. The redox initiator/catalyst system is more preferable because of having the advantage of easily controlling the graft ratio to allow the resulting resin composition to be excellent in mechanical strength, and furthermore, because of easily increasing the final polymerization rate to thereby make it possible to suppress the amounts of the unreacted monomers and oligomers in the composition. In this case, an ungrafted copolymer is naturally generated in addition to the graft copolymer (A) (corresponding to (B) in the present invention). In Examples of the present application, component (a) including this ungrafted component (B) is added as the graft copolymer (A). That is, the following is satisfied: (a) = (A) + ungrafted component (B).

As a method for producing the polymer (B), a method such as emulsion polymerization, block polymerization, suspension polymerization, suspension block polymerization and solution polymerization can be adopted.

The polymer (B) in the present embodiment also includes the ungrafted component (B) produced as a by-product in the production of the component (A). The reduced viscosity (ηsp/c) of the entire of such components (B) is preferably 0.3 to 1.0 dl/g, more preferably 0.35 to 1.0 dl/g, further preferably 0.35 to 0.9 dl/g, and particularly preferably 0.35 to 0.6 dl/g. When the reduced viscosity of the polymer (B) is in this range, a composition excellent in balance between molding flow properties and impact resistance can be obtained.

In order to examine the reduced viscosity of the polymer (B) from the composition or the injection-molded article, it can be obtained by, for example, the following procedure: first, the component (A)is separated by using a solvent that does not dissolve the component (A) and dissolves other components; to the remaining mixed solution of the component (B) and the component (C), a solvent that dissolves the component (B) well but does not dissolve the component (C) is added to reprecipitate the component (C), thereby separating the mixed solution into the component (C) and the component (B); and the efflux time of a solution containing 0.50 g of the component (B) in 100 ml of 2-butanone is measured in a Cannon-Fenske type capillary at up to 30°C.

When the component (B) in the present embodiment is a copolymer of an aromatic vinyl monomer and a vinyl cyanide monomer, or a terpolymer including an aromatic vinyl monomer, a vinyl cyanide monomer and an acrylate monomer, the amount of the vinyl cyanide monomer contained relative to 100% by mass of the copolymer (B) or terpolymer (B) is preferably 15 to 45% by mass, more preferably 25 to 45% by mass, further preferably 30 to 45% by mass, and particularly preferably 35 to 45% by mass. The amount is in this range to thereby allow transparency and chemical resistance to be good.

When the acrylate monomer is contained, the amount of the acrylate monomer contained is preferably 1 to 15% by mass and more preferably 3 to 10% by mass when the amount of the component (B) is regarded as 100% by mass. When the acrylate monomer is here contained, not only flow properties are further enhanced but also an injection-molded article which is good in transparency and jet-blackness is more easily obtained. In particular, butyl acrylate or butyl methacrylate is preferably used.

In order to examine the contained amount of the vinyl cyanide monomer from the composition or the injection-molded article, it can be determined by subjecting the component (B) extracted and taken out to a Fourier transform infrared spectrophotometer (FT-IR).

### <Polyester (C)>

In the present embodiment, a polyester comprising at least an alicyclic diol and an aromatic dicarboxylic acid is included as a component (C). In the present embodiment, the component (C) can be included to thereby provide a high quality appearance and a high impact resistance as well as an excellent chemical resistance.

The polyester (C) comprising at least an alicyclic diol and an aromatic dicarboxylic acid in the present embodiment is preferably a condensation polymer of diols including an alicyclic diol compound and/or a derivative from the alicyclic diol compound, and dicarboxylic acids including an aromatic dicarboxylic acid and/or a derivative from the aromatic dicarboxylic acid.

The diols according to the present embodiment include alicyclic diols such as 1,2-cyclohexanediol, 1,2-cyclohexanedimethanol, 1,3-cyclohexanedimethanol, 1,4-cyclohexanedimethanol and 2,2,4,4-tetramethyl-1,3-cyclobutanediol, and among them, 1,4-cyclohexanedimethanol and/or 2,2,4,4-tetramethyl-1,3-cyclobutanediol is preferable.

When the entire of the diols is regarded as 100% by mol, it is preferable that the amount of 1,4-cyclohexanedimethanol is 20 to 70% by mol and the amount of 2,2,4,4-tetramethyl-1,3-cyclobutanediol is 30 to 80% by mol. It is more preferable that that of 1,4-cyclohexanedimethanol is 30 to 60% by mol and that of 2,2,4,4-tetramethyl-1,3-cyclobutanediol is 40 to 70% by mol.

As the diols according to the present embodiment, cis diols, trans diols, or a mixture thereof can be used.

While the diols according to the present embodiment may contain other diols other than the alicyclic diol as long as the effect of the present embodiment is not impaired, the amount of other diols other than the alicyclic diol is preferably 5% by mol or less in order to maintain the effect of the present invention. Other diols other than the alicyclic diol include ethylene glycol, 1,2-propanediol, 1,5-pentanediol, 1,6-hexanediol and p-xylene glycol.

The dicarboxylic acids according to the present embodiment include terephthalic acid, isophthalic acid, orthophthalic acid, 2,6-naphthalenedicarboxylic acid and 4,4'-biphenyldicarboxylic acid, and among them, terephthalic acid is preferable.

The resin composition according to the present embodiment can contain if necessary various resins other than the components (A) to (C) by an arbitrary method as long as the effect of the present invention is not impaired. Such resins include aromatic polycarbonates and amorphous polyesters. The contained amount of each thereof is preferably in a range of not more than 25% by mass relative to 100% by mass of the total of the components (A) to (C). The amount is more preferably 10% by mass or less.

In the present embodiment, the preferable contained amounts of (A) the graft copolymer obtained by graft polymerization of at least two monomers selected from the group consisting of an aromatic vinyl monomer, a vinyl cyanide monomer and other copolymerizable monomers in the presence of the rubber polymer, (B) the polymer obtained by polymerizing at least two monomers selected from the group consisting of an aromatic vinyl monomer, a vinyl cyanide monomer and other copolymerizable monomers, and (C) the polyester comprising at least an alicyclic diol and an aromatic dicarboxylic acid are as follows: when the total amount of the components (A) to (C) is regarded as 100% by mass, the total amount of the component (A) and the component (B) is preferably 20 to 80% by mass, more preferably 30 to 70% by mass and further preferably 35 to 65% by mass, and the amount of the component (C) is preferably 80 to 20% by mass, more preferably 70 to 30% by mass and further preferably 65 to 35% by mass. When the total amount of the component (A) and the component (B) contained is 20% by mass or more, excellent flow properties and impact resistance are obtained, and when the total amount is 80% by mass or less, excellent impact resistance is obtained.

In the present embodiment, the preferable contained amount of the component (A) is 15 to 50% by mass, preferably 15 to 40% by mass and more preferably 20 to 40% by mass when the total amount of the components (A) to (C) is regarded as 100% by mass. When the amount is 15% by mass or more, impact resistance and extrusion stability are not poor, and when the amount is 50% by mass or less, transparency and flow properties are not poor.

In order to examine the amount of the component (A), the total amount of the component (A) and the component (B), and the amount of the component (C) from the composition or the injection-molded article, for example, a method can be used which includes first separating the component (A) using a solvent that does not dissolve the component (A) and dissolves other components, adding a solvent that dissolves the component (B) well but does not dissolve the component (C) to the remaining mixed solution of the component (B) and the component (C), to reprecipitate the component (C), thereby separating the mixed solution into the component (C) and the component (B), and measuring the mass of each of the components (A) to (C). With respect to the solvents, for example, methylene chloride or chloroform can be used for the solvent that does not dissolve the component (A) and dissolves other components, and acetone can be used for the solvent that dissolves the component (B) well but does not dissolve the component (C). Even if the resin composition or the injection-molded article includes a material other than the above components, any solvent is selected depending on each composition and the above operation can be easily performed.

### <Additives>

The resin composition according to the present embodiment can contain if necessary various additives other than the above components by an arbitrary method as long as the effect of the present invention is not impaired. Such additives include a plasticizer, a lubricant, a coloring agent, an antistatic agent, various peroxides, an antioxidant, an UV absorber and a light stabilizer. The contained amount of each of these additives is preferably in a range of not more than 10% by mass relative to that of the resin composition.

In order to achieve a high quality appearance, carbon black or a dye having high blackness is preferably used as the coloring agent. The carbon black having high blackness is preferably higher than "Mitsubishi Carbon Black #960" (manufactured by Mitsubishi Chemical Corporation) having a PVC blackness of 28, preferably higher than "Mitsubishi Carbon Black #980" (manufactured by Mitsubishi Chemical Corporation) having a PVC blackness of 36. The PVC blackness here means not an absolute value but a relative value expressing the blackness of a compound obtained by kneading carbon black and a PVC resin. It can be said that the higher the blackness is, the higher the jet-blackness of a PVC resin is. When a dye is used, several kinds of dyes are preferably used in combination. For example, organic dyes are preferably used in combination, and three or more organic dyes are preferably used in combination in order to provide the jet-blackness of the present invention. For example, three or more colors are preferably selected from the following dyes and pigments of each color.
Red; S.R.179, S.R.111, D.R.60, S.R.145, D.R.191, S.R.52, S.R.150, S.R.149, S.R.24, V.R41
Blue; S.B.35, D.B.14, S.B.97, S.B.87, D.B.60
Yellow; D.Y.54 (S.Y.114), D.Y.157, D.Y.160, D.Y.105, S.Y.16, S.Y.93, D.Y201
Green; S.G.3
Purple; D.V.28, S.V.13, D.V.26, S.V.36

The above description corresponds to Color Index (C.I.) No. of each dye.

### <Production method>

Then, one example of a method for producing the resin composition of the present embodiment is described below.

Examples of the method for producing the resin composition of the present embodiment include:
(1) a method including supplying the components (A) to (C) to a twin screw extruder at one time for melting and kneading;
(2) a method including using a twin screw extruder provided with an upstream supply port and a downstream supply port to supply the component (A) and the component (B) through the upstream supply port for melting and kneading, and then supplying the component (C) through the downstream supply port for melting and kneading;
(3) a method including using a twin screw extruder provided with an upstream supply port and a downstream supply port to supply the component (C) through the upstream supply port for melting and kneading, and then supplying the component (A) and the component (B) through the downstream supply port for melting and kneading;
(4) a method including using a twin screw extruder provided with an upstream supply port and a downstream supply port to supply the component (A) and the component (C) through the upstream supply port for melting and kneading, and then supplying the component (B) through the downstream supply port for melting and kneading; and
(5) a method including using a twin screw extruder provided with an upstream supply port and downstream supply ports at two positions to supply a part of the component (A), and the component (C) through the upstream supply port for melting and kneading, and then melting and kneading the remaining component (A), and the component (B) through the downstream supply ports.

The resin composition of the present embodiment, in which the component (A), the component (B) and the component (C) are each contained in a specific amount and the coefficient of linear expansion of the component (A) is controlled in a range from 12.5 × 10⁻⁵ to 19 × 10⁻⁵/°C, can thus have conflicting characteristics: high quality appearance (transparency, image clearness and jet-blackness), and impact resistance, flow properties, and chemical resistance.

### <Method for producing molded article>

The resin composition of the present embodiment is characterized in that it can be used to prepare a molded article having a high quality appearance simply by injection molding without coating. Such a molded article having a high appearance can be produced by, for example, common injection molding using an injection molder at a cylinder temperature of 270°C and a mold temperature of 70°C. In addition, heating and cooling molding in which heating/cooling is repeated at mold temperatures of 80°C and 130°C is preferable, by which a molded article having a high appearance can be more easily obtained. This molding is preferably used in particular in the case of a thin molded article.

In order to obtain the molded article having a high quality appearance of the present embodiment, a higher injection speed is preferable, and not so high injection pressure is preferable. The higher injection speed can allow the surface state of the molded article to be more uniform, and the oblateness of the rubber polymer on the surface layer of the molded article by the injection pressure can be controlled to thereby provide a molded article having higher jet-blackness and chromogenic property.

### Examples

Hereinafter, the present embodiment is more specifically described with reference to Examples, but the present embodiment is not limited thereto at all.

Raw materials used are as follows.

### (Raw materials used)

1. ((a) ABS (including ungrafted components)
   Acrylonitrile • butadiene • styrene copolymers;
   (a-1) graft copolymer (A): 69% by mass (butadiene: 30% by mass, graft ratio: 130%), ungrafted copolymer (B): 31% by mass (contained amount of vinyl cyanide monomer; 20% by mass), reduced viscosity: 0.39 dl/g, volume average particle size of rubber polymer: 250 nm.
   (a-2) graft copolymer (A): 54% by mass (butadiene: 40% by mass, graft ratio: 35%), ungrafted copolymer (B): 46% by mass (contained amount of vinyl cyanide monomer; 25% by mass), reduced viscosity: 0.38 dl/g, volume average particle size of rubber polymer: 250 nm.
   (a-3) graft copolymer (A): 78% by mass (butadiene: 30% by mass, graft ratio: 160%), ungrafted copolymer (B): 22% by mass (contained amount of vinyl cyanide monomer; 40% by mass), reduced viscosity: 0.5 dl/g, volume average particle size of rubber polymer: 250 nm.
2. ((B) AS;
   Acrylonitrile●styrene copolymers
   (B-1) acrylonitrile: 20% by mass, styrene: 80% by mass, reduced viscosity: 0.67 dl/g.
   (B-2) acrylonitrile: 25% by mass, styrene: 75% by mass, reduced viscosity: 0.62 dl/g.
   (B-3) acrylonitrile: 30% by mass, styrene: 70% by mass, reduced viscosity: 0.58 dl/g.
   (B-4) acrylonitrile: 34% by mass, styrene: 66% by mass, reduced viscosity: 0.61 dl/g.
   (B-5) acrylonitrile: 39% by mass, styrene: 51% by mass, mass of butyl acrylate: 10%, reduced viscosity: 0.42 dl/g.
3. ((C) Polyester;
   (C-1) trade name "Tritan TX2000", manufactured by Eastman Chemical Company
      including 2,2,4,4-tetramethyl-1,3-cyclobutanediol and 1,4-cyclohexanedimethanol as glycol components.
      including terephthalic acid as an aromatic dicarboxylic acid component. (C-2) trade name "PCT-G DN001", manufactured by Eastman Chemical Company
      including ethylene glycol and 1,4-cyclohexanedimethanol as glycol components.
      including terephthalic acid as an aromatic dicarboxylic acid component. (C-3) trade name "PET-G GN001", manufactured by Eastman Chemical Company
      including ethylene glycol and 1,4-cyclohexanedimethanol as glycol components.
      including terephthalic acid as an aromatic dicarboxylic acid component.
4. ((D) Aromatic polycarbonate;
   trade name "Panlite L-1250Y", manufactured by Teijin Limited

Evaluation methods of respective physical properties are as follows.

### (Evaluation methods)

### <Measurement of coefficient of linear expansion>

A resin composition pellet and chloroform were shook by a shaker for 2 hours. After shaking, the resultant was subjected to centrifugation by a centrifuge at a speed of rotation of 20000 rpm for 60 minutes. After completion of the centrifugation, decantation was conducted. This operation was carried out three times, and a precipitate (chloroform insoluble (E)) was taken out. This precipitate was dried at 80°C for 30 minutes and then allowed to stand to cool in a desiccator for 30 minutes or more. This precipitate, which was sandwiched by an aluminum plate and a metal plate from above and below, was molten on a heating plate at 230°C, compressed so as to have a thickness of 4 mm, and solidified. The resulting molded article was cut by a plastic cutting machine so as to have a size of 4 mmt in length, 5 mm in width and 10 mm in height. The resulting piece was evaluated by a thermodilatometer (TMA) according to ASTM D696. The value of the coefficient of linear expansion was obtained by averaging of the values at three measurement points.

### <Measurements of total light transmittance and Haze>

A flat plate having a size of 5 cm × 9 cm and having a thickness of 2.5 mm was injection-molded using an injection molder at a cylinder temperature of 250°C and at a mold temperature of 60°C. This flat plate was used for evaluation according to ASTM D1003. The values of the total light transmittance and the Haze were each obtained by averaging of the values at three measurement points.

### <Measurement of image clearness>

A flat plate having a size of 5 cm × 9 cm and having a thickness of 2.5 mm was injection-molded using an injection molder at a cylinder temperature of 250°C and at a mold temperature of 60°C. This flat plate was used for measurement using an image clarity measuring apparatus (Suga Test Instruments Co., Ltd., ICM-10P Model, slit interval: 0.125 mm, reflection angle: 60°). The value of the image clearness was obtained by averaging of the values at five measurement points.

### <Measurement of Charpy impact strength>

A multi-purpose test piece A type having a thickness of 4 mm (length: 150 mm, width of narrow portion: 10.0 mm) was molded using an injection molder at a cylinder temperature of 250°C and at a mold temperature of 60°C according to ISO294. The resulting test piece was processed so as to have a shape of 80 × 10 × 4 mm, and the processed test piece was provided with a notch, then the resulting piece was used to measure the Charpy impact strength according to ISO179. The Charpy impact value was obtained by averaging of the values at ten measurement points.

### <Measurement of flow properties>

The resulting resin composition pellet was subjected to measurement according to ISO1133 under conditions of 220°C and a load of 10 kg. The MVR value was obtained by averaging of the values at three measurement points.

### <Measurement of chemical resistance>

A three-step plate having thicknesses of 3 mm, 2 mm and 1 mm stepped from a gate was injection-molded using an injection molder at a cylinder temperature of 250°C and at a mold temperature of 60°C. A commercially available acrylic lacquer [main solvent "butyl acetate"; 60%, co-solvents "ethylbenzene, xylene, isopropanol"; 40%)] was perpendicularly applied to the portion having a thickness of 1 mm of this plate, and then the plate was left to stand in a constant temperature and a constant humidity room for 48 hours. Thereafter the surface property was visually rated according to the following.
⊚ (Excellent); Surface had gloss, and surrounding articles were clearly reflected on the surface.
○ (Good); Surface had poor gloss, and profiles of surrounding articles reflected were not clear.
× (Poor); Surface had no gloss, and surrounding articles were not reflected on the surface.

### <Measurement of jet-blackness>

After 1 part by mass of carbon black was kneaded into 100 parts by mass of a thermoplastic resin composition in each of Examples 1 to 11 and Comparative Examples 1 to 4 as described later, a flat plate having a size of 5 cm × 9 cm and having a thickness of 2.5 mm was injection-molded using an injection molder at a cylinder temperature of 270°C and at a mold temperature of 70°C. As the carbon black, "Mitsubishi Carbon Black #980" (manufactured by Mitsubishi Chemical Corporation) having a PVC blackness of 28 was used.

This flat plate was used to measure L* using a multiple-light-source spectroscopic colorimeter "MSC-5N-GV5" (manufactured by Suga Test Instruments Co., Ltd.) under conditions of d/8 reflection (excluding regular reflection light), a measurement hole of φ15, C light source/2° visual field, and the L*a*b* color system. The L* value was obtained by averaging of the values at two measurement points.

### (Examples 1 to 6, 8 to 11)

Each resin composition was prepared using a twin screw extruder ("TEM-58SS" manufactured by Toshiba Machine Co., Ltd.) as follows. One supply port was provided at the upstream, and components (a), (B) and (C) sufficiently dried for the removal of water content were supplied through the port. The cylinder temperature of the extruder here was set so that the temperatures of all steps were 250°C. Herein, the discharged amount of a kneaded product was 300 kg/hour, and the speed of the screw rotation was 250 rpm.

The types of raw materials and the contained proportions thereof here are shown in Table 1. The resulting pellet was used for the above-described evaluations. The results are shown in Table 1.

### (Example 7)

A pellet was obtained in the same manner as in Example 1 except that an aromatic polycarbonate resin was added as component (D) and only ungrafted copolymer (B) included in component (a) was used as component (B).

The types of raw materials and the contained proportions thereof here are shown in Table 1. The resulting pellet was used for the above evaluations. The results are shown in Table 1.

### (Comparative Example 1)

A resin composition was prepared using a twin screw extruder ("TEM-58SS" manufactured by Toshiba Machine Co., Ltd.) as follows. One supply port was provided at the upstream, and components (a) and (B) sufficiently dried for the removal of water content were supplied through the port. The cylinder temperature of the extruder here was set so that the temperatures of all steps were 250°C. Herein, the discharged amount of a kneaded product was 300 kg/hour, and the speed of the screw rotation was 250 rpm.

The types of raw materials and the contained proportions thereof here are shown in Table 1. The resulting pellet was used for the above-described evaluations. The results are shown in Table 1.

### (Comparative Example 2)

A pellet was obtained in the same manner as in Comparative Example 1 except that component (D) was added and supplied.

The types of raw materials and the contained proportions thereof here are shown in Table 1. The resulting pellet was used for the above-described evaluations. The results are shown in Table 1.

### (Comparative Examples 3 and 4)

Each pellet was obtained in the same manner as in Comparative Example 2 except that component (C) was added and supplied instead of component (D).

The types of raw materials and the contained proportions thereof here are shown in Table 1. The resulting pellet was used for the above-described evaluations. The results are shown in Table 1.

[Table 1]

**Table 1**

| | | | Example 1 | Example 2 | Example 3 | Example 4 | Example 5 | Example 6 | Example 7 | Example 8 | Example 9 | Example 10 | Example 11 | Comparative Example 1 | Comparative Example 2 | Comparative Example 3 | Comparative Example 4 |
|---|---|---|---|---|---|---|---|---|---|---|---|---|---|---|---|---|---|
| (a - 1) ABS | VCN20 | Bd;30wt% (% by mass) | 40 | 40 | 40 | | | | 40 | 40 | | 40 | 40 | | | | |
| (a - 2) ABS | VCN25 | Bd;40wt% (% by mass) | | | | | | | | | | | | 60 | 20 | 30 | |
| (a-3) ABS | VCN40 | Bd;30wt% (% by mass) | | | | 33 | 33 | 33 | | | 33 | | | | | | 13 |
| (B - 1) AS | VCN20 | (% by mass) | 10 | | | | | | | | | 10 | 10 | | | 20 | |
| (B - 2) AS | VCN25 | (% by mass) | | 10 | | | | | | | | | | 40 | 10 | | |
| (B -3) AS | VCN30 | (% by mass) | | | 10 | | | 12 | | | | | | | | | |
| (B - 4) AS | VCN34 | (% by mass) | | | | | 12 | | | | | | | | | | |
| (B - 5) BAAS | VCN39 | (% by mass) | | | | 12 | | | | 50 | 7 | | | | | | |
| (C - 1) Polyester | Tritan | (% by mass) | 50 | 50 | 50 | 55 | 55 | 55 | 55 | 10 | 60 | | | | | 50 | 87 |
| (C - 2) Polyester | PCT-G | (% by mass) | | | | | | | | | | 50 | | | | | |
| (C - 3) Polyester | PET-G | (% by mass) | | | | | | | | | | | 50 | | | | |
| (D) PC | | (% by mass) | | | | | | | 5 | | | | | | 70 | | |
| Total amount (% by mass) | | | 100 | 100 | 100 | 100 | 100 | 100 | 100 | 100 | 100 | 100 | 100 | 100 | 100 | 100 | 100 |
| Component (A) (% by mass) | | | 28 | 28 | 28 | 26 | 26 | 26 | 28 | 28 | 26 | 28 | 28 | 32 | 11 | 16 | 10 |
| Total amount of component (B) (% by mass) | | | 22 | 22 | 22 | 19 | 19 | 19 | 12 | 62 | 14 | 22 | 22 | 68 | 19 | 34 | 3 |
| Average AN ratio of component (B) (% by mass) | | | 20 | 22 | 25 | 39 | 36 | 34 | 20 | 35 | 40 | 20 | 20 | 25 | 25 | 22 | 40 |
| Average viscosity of component (B) η sp/c (dℓ/g) | | | 0.50 | 0.48 | 0.47 | 0.45 | 0.57 | 0.55 | 0.39 | 0.41 | 0.46 | 0.50 | 0.50 | 0.50 | 0.49 | 0.55 | 0.50 |
| Coefficient of linear expansion of component (A) (chloroform insoluble) (×10⁻⁵/°C) | | | 14.7 | 14.7 | 14.7 | 13.7 | 13.7 | 13.7 | 14.7 | 14.7 | 13.7 | 14.7 | 14.7 | 20.9 | 20.9 | 20.9 | 13.7 |
| Total light transmittance (transparency) (%) | | | 53.9 | 55.1 | 56.4 | 61.5 | 57.0 | 56.2 | 48.0 | 47.7 | 62.0 | 46.0 | 45.0 | 37.5 | 25.0 | 44.0 | 79.4 |
| Haze (transparency) (%) | | | 65.5 | 63.1 | 60.4 | 49.7 | 59.1 | 60.8 | 77.9 | 78.5 | 48.6 | 80.0 | 85.2 | 99.0 | 99.0 | 86.3 | 12.3 |
| Image clearness | | | 87 | 87 | 86 | 87 | 86 | 86 | 85 | 84 | 86 | 86 | 86 | 81 | 74 | 75 | 80 |
| Charpy impact strength (kJ/m²) | | | 40 | 38 | 38 | 43 | 45 | 45 | 39 | 20 | 45 | 50 | 20 | 20 | 50 | 40 | 12 |
| MVR (cc / 10min) | | | 5.0 | 5.0 | 5.0 | 6.0 | 5.0 | 5.0 | 5.0 | 6.3 | 5.4 | 5.0 | 5.0 | 7.5 | 4.0 | 5.2 | 4.5 |
| Chemical resistance | | | ○ | ○ | ○ | ⊚ | ⊚ | ⊚ | ○ | ⊚ | ⊚ | ○ | ○ | ○ | × | ○ | ⊚ |
| Jet-blackness L*(-) | | | 4.5 | 4.3 | 3.5 | 2.9 | 4.0 | 4.0 | 4.8 | 4.5 | 3.2 | 4.8 | 4.8 | 6.5 | 7.0 | 4.8 | 2.5 |

The resin composition pellets in Examples 1 to 11 of the present embodiment are excellent in transparency and image clearness as compared with those in Comparative Examples 1, 2 and 3. They are excellent in impact resistance as compared with that in Comparative Example 4. It is found in the present embodiment that these physical properties are well-balanced and furthermore chemical resistance is also excellent.

### Industrial Applicability

Since the resin composition of the present invention is excellent in transparency, image clearness and jet-blackness to thereby simultaneously have a high chromogenic property (high quality appearance) and a high impact resistance. Furthermore, it is also good in flow properties and chemical resistance, the resin composition has industrial applicability for a housing of electrical/electronic equipment, an exterior part of a vehicle, and the like.

## Claims

1. A thermoplastic resin composition comprising:
(A) a graft copolymer obtained by grafting a rubber polymer with at least two monomers selected from the group consisting of an aromatic vinyl monomer, a vinyl cyanide monomer and other copolymerizable monomers,
(B) a polymer obtained by polymerizing at least two monomers selected from the group consisting of an aromatic vinyl monomer, a vinyl cyanide monomer and other copolymerizable monomers, and
(C) a polyester comprising at least an alicyclic diol and an aromatic dicarboxylic acid,
wherein, when a total amount of the components (A) to (C) is regarded as 100% by mass, an amount of the component (A) is 15 to 50% by mass and a total amount of the components (B) and (C) is 50 to 85% by mass, and a coefficient of linear expansion of the component (A) is 12.5 × 10⁻⁵ to 19 × 10⁻⁵/°C.

2. The thermoplastic resin composition according to claim 1, wherein the alicyclic diol in the component (C) comprises 2,2,4,4-tetramethyl-1,3-cyclobutanediol (TMCD) and 1,4-cyclohexanedimethanol (CHDM), and the aromatic dicarboxylic acid in the component (C) comprises terephthalic acid.

3. The thermoplastic resin composition according to claim 1 or 2, wherein, when the total amount of the components (A) to (C) is regarded as 100% by mass, a total amount of the components (A) and (B) is 20 to 80% by mass and an amount of the component (C) is 80% by mass to 20% by mass.

4. The thermoplastic resin composition according to any one of claims 1 to 3, wherein, when a total amount of the aromatic vinyl monomer, the vinyl cyanide monomer and the other copolymerizable monomers in the component (B) is regarded as 100% by mass, an amount of the vinyl cyanide monomer contained is 30 to 45% by mass.

5. The thermoplastic resin composition according to any one of claims 1 to 4, wherein, when a total amount of the aromatic vinyl monomer, the vinyl cyanide monomer and the other copolymerizable monomers in the component (B) is regarded as 100% by mass, 1 to 15% by mass of an acrylate monomer unit component is included.

6. The thermoplastic resin composition according to any one of claims 1 to 5, further comprising carbon black and/or a dye as a coloring agent.

7. An injection-molded article obtained by injection-molding the thermoplastic resin composition according to any one of claims 1 to 6.

8. The injection-molded article according to claim 7, wherein the injection-molded article is a housing.

9. The injection-molded article according to claim 7 or 8, wherein the injection-molded article is uncoated.
